# EUROPEAN PATENT APPLICATION

(11) **EP 1 243 755 A1**
(43) Date of publication of application: **25.09.2002**
(21) Application number: 01302524.2
(22) Date of filing: 16.03.2001
(51) Int. Cl.: F01D 11/02, F16J 15/44

(54) **Elastic fluid turbine employing a sealing ring**

(71) Applicant: Brandon, Ronald E., Melbourne, FL 32940 (US); Brandon, David E., Binghamton, NY 13903 (US)
(72) Inventor: Brandon, Ronald E., Melbourne, FL 32940 (US); Brandon, David E., Binghamton, NY 13903 (US)
(74) Representative: Sanderson, Michael John

(57) **Abstract**

A segmented seal ring and spring system for steam turbines for minimizing leakage between rotating and stationary components, and preventing damage and wear thereto, including a segmented seal ring, with special springs biased against the seal segments to urge the segments radially inwardly toward the small clearance position of the seal ring with respect to the turbine shaft, also with secondary springs to counter the weight of the segments; with the combination of said springs gently urging the seal segments into the small clearance position while allowing clearance enlargement with small resulting forces on the shaft during periods of misalignment and rubbing.

## Description

The present invention relates to seals employed in elastic fluid axial flow turbines and, more particularly, to segmented packing ring seals arranged both where rotatable shafts penetrate stationary turbine casings and, in addition, internal to the casings between stages and turbine sections.

Generally, such known seals prevent or reduce leakage of the fluid by creating small clearance areas with low flow coefficients between the rotating and stationary parts. Improved efficiency, minimized loss of fluid and prevention of undesirable side effects caused by leakage of fluid are objectives of such seals.

Also, these segmented, labyrinth type seals are vulnerable to rubbing damage caused by turbine misalignment, vibration and thermal distortion. Most of these damage causing factors are more likely to occur during starting, at light loads or following sudden loss of load. As a result, not only do the seals become worn, but at the point of rubbing, heat is generated in the shaft causing bowing of the shaft with resultant vibration and increased damage to additional shaft packing seals and even more critical tip seals that limit leakage past rotating blades.

Traditional segmented packing rings employ springs that force the segments toward the shaft as limited by shoulders on the packing ring holder. The springs are normally designed to provide assurance that all segments will be pushed inward until limited by either the shaft or the shoulders. The lowest segment requires the greatest force, since the weight of all higher segments must often be supported by the lowest one, thus requiring a spring force equal to the weight of all segments, plus some safety margin for unavoidable friction. Since each segment normally has the same spring behind it, the force that must be overcome by the shaft to make any of the packing segments shift positions is quite large, with the unavoidable ability to generate large amounts of local heat in the shaft.

U.S. Patent 4,436,311 issued to Ronald E. Brandon describes retractable packing rings, which during start-up conditions, have large radial clearance that automatically decreases to a small clearance condition when a predetermined flow condition has been reached. Such rings have been successfully applied in turbine applications where the pressure forces are significantly greater than the weight forces of the packing segments. In the low pressure stages, however, weight forces are often too large to be successfully overcome by available turbine pressure forces.

In U.S. Patent No. 5,395,124 issued to Ronald E. Brandon there is disclosed a segmented, retractable, labyrinth-type shaft sealing system for low pressure turbines wherein the packing segments are provided with a combination of gravity or levitation springs that provide a vertical force to neutralize segment weight forces and butt springs that resist pressure forces so as to cause a large clearance at turbine start up and then permit segment motion to allow the clearance to become small after operational conditions are established.

Retractable designs, however, cannot be readily applied to several turbine packing locations. These include, but are not limited to, the outer three packing rings in each turbine casing and double flow nozzle diaphragms.

With regard to the three outer rings it has not been possible to use retractable rings in these turbine locations due to the fact that they must be in the closed position during start up, and also, they must operate for the most part with the same pressure drop at all operating conditions.

As originally designed, these packing rings must employ relatively strong back springs that support the segments and simultaneously force them toward the shaft, yet during periods of shaft misalignment when the packing is rubbing the shaft, allow the segments to yield. Because of the relatively high spring force, the rubbing contact of shaft and packing teeth generates significant amounts of heat in the shaft, leading to bowing, rubbed packing teeth and tip seals, vibration and aborted start-ups. The thermodynamic losses are significant.

The heat generated during such events is proportional to the spring force that resists the temporary motion of the packing segment when the teeth are in contact with the rotating shaft. It is thus desirable to minimize the spring force selected to keep the segments in the closed position. It is expected that this will usually reduce heat generation to less than one-hundredth that experienced in original designs.

In some intermediate pressure turbine sections and almost all low-pressure turbine sections, a double flow entry nozzle is provided. This nozzle needs a packing ring to prevent leakage along the shaft from one end of the nozzle to the other. This is due to the fact that the pressure never turns out to be exactly the same at both sides. Leakage effects can be serious since a 1% leak will cause a 1% stage loss at each end of the nozzle.

These segments cannot be made retractable since there is no designated pressure difference on which to base closing forces. As a result, when being rubbed by the shaft these rings can cause significant vibration and shaft bowing. The undesirable effects are magnified by the fact that the double flow nozzle is highly likely to distort during both transient and steady state operation and, worse, being located in the center of the span, to cause severe bowing of the shaft.

In all of the above cases it would be desirable to reduce the spring forces to reduce the force necessary to cause motion of packing segments yet still assure a closing motion of packing segments when the rubbing condition is over. That is the purpose of this invention.

It would be desirable to be able to provide an improved seal or packing ring arrangement for all turbine locations including those where only small pressure drops are present during normal operating conditions.

It would also be desirable to be able to provide seal ring arrangements for the three outer rings of turbine casings and the ring held in the double flow nozzle wherein the spring forces that resist yielding of the seal ring segment during shaft rubbing episodes are minimized yet are still capable of returning the packing segments to the closed position when the rubbing condition has ended.

It would also be desirable to be able to provide a seal ring arrangement wherein the seal ring segments during rubbing episodes cause a minimum amount of heat to be generated at the surface of the shaft and a minimum amount of shaft bowing as a result of the rubbing.

It would also be desirable to be able to provide a seal ring arrangement having spring means arranged to effectively counteract the weight of the segments to reduce the spring force necessary to keep the packing segments in a minimum clearance position.

It would also be desirable to be able to decrease the cost of maintaining turbines due to seal damage, while increasing operating efficiency by permitting smaller operating clearance with lower leakage flow coefficients than presently known.

According to the present invention there is provided a segmented seal ring and spring system for steam turbines for minimizing leakage between rotating and stationary components, including a segmented seal ring being supported by and at least partially contained in an annular T-shaped or L-shaped groove formed in the turbine casing and extending circumferentially around the turbine shaft. The spring system includes springs positioned to be biased against the segments of the seal ring to urge the segments radially inwardly toward a small clearance position of the seal ring with respect to the turbine shaft, yet with the use of minimum force.

The individual strengths of the springs are selected depending on the circumferential positions of the seal segments, the fluid pressure forces, and the weight and friction forces to thereby assure that the seal ring segments are in the small clearance position at all times except when misalignment and contact with the shaft causes one or more segments to be shifted from that position.

A special gravity or levitation spring is provided in the lowest, lower half seal ring segments with the lower end of such spring in contact with the turbine casing while the upper spring end is biased against the seal segment to produce an upward force on the segments to counter the downward force caused by the weight of the segments. The gravity springs have a spring force in the vertical direction, which is approximately equal to the weight of the segment which it supports, so that during shaft rubs, the force required by the shaft to shift the seal segment outward is minimized. When the rubbing period is over, the springs can assure return of the segment to the normal closed position.

The top segments are supported by keys bolted to the horizontal joint of the backing holders, but pins can be used instead.

The upper segments will require inward forcing springs at the bottom of the segments with enough force to overcome sliding friction plus the horizontal outward force of the butt spring located between the top two segments. The friction can be reduced by the addition of butt-mounted coil springs under the segment with force approximately equal to the weight of all segments, which are supported by the spring.

The upper held segments benefit from being isolated from the lower segments and supported from the horizontal joints.

The lower segments can be further assisted in closing to the small clearance position at the side locations by the addition of springs pushing the segments radially inwardly near the horizontal joints.

In the accompanying drawings:
- Fig. 1: is a partial longitudinal sectional view of a horizontal elevation of a portion of one seal ring of a multistage axial flow elastic turbine embodying the invention, with the section being taken through one segment of a segmented seal ring;

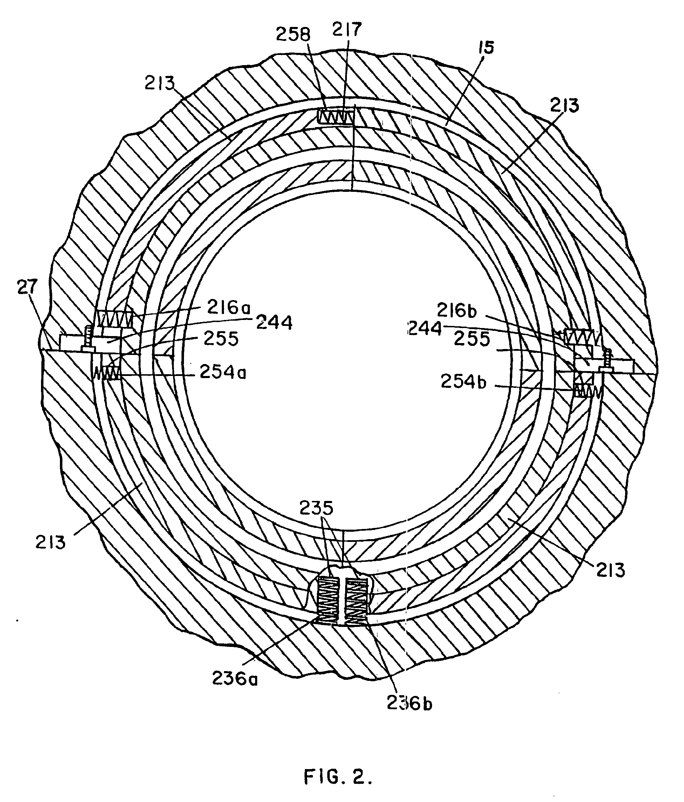

- Fig. 2: is a transverse cross sectional view, of a modified segmented seal ring and spring combination comprised of four segments, with two gravity springs to support the two lower segments with portions broken away to illustrate the gravity springs in the bottom segments, and with side springs at the upper ends of the bottom segments to urge the sides to the small clearance position, while in the upper half, the lower ends have springs to urge the segments to the small clearance position, while at the top, a spring mounted between the ends of the top segments tends to help separate the two segments during periods of shaft rubs against the packing segments;
- Fig. 3: is a partial longitudinal section view of a horizontal elevation of a portion of a modified seal ring, similar to that shown in Fig. 1;
- Fig. 3A: is a partial longitudinal sectional view of a horizontal elevation of a portion of a further modified seal ring similar to Fig. 3; and
- Fig. 4: is a partial longitudinal section of a still further modified seal ring.

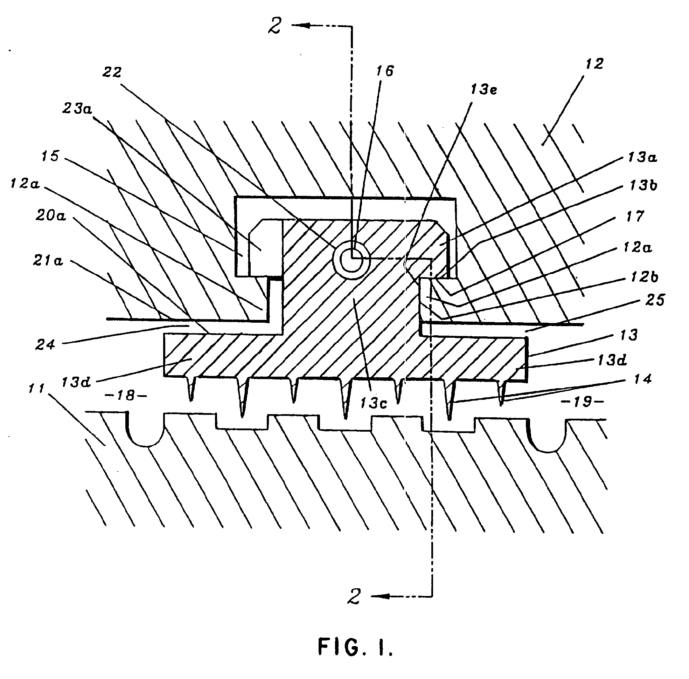

Referring to Fig. 1, the turbine includes a rotor, a portion of which is shown at 11, and a casing, a portion of which is shown at 12. With regard to interstage seals, it should be noted that part 12, the casing, could instead be called a diaphragm. Only one seal ring 13 is illustrated, although several such rings could be arranged in series. It will be understood by those skilled in the art that the remainder of the turbine necessarily includes means for introducing steam at high pressure and exhausting it at lower pressure, with nozzles, buckets, wheels and other components which do not need inclusion here to explain the seal function which is affected by the invention. The seal ring shown is typical of many found throughout the turbine.

The seal ring 13 includes a plurality of teeth 14 that are disposed in opposition to circumferential portions of the shaft which are alternately stepped up and down in radius. With high pressure fluid at 18 and low pressure at 19 there will be a positive force to cause fluid leakage between the multiple restrictions formed by the small openings between the teeth 14 and the shaft 11. The combination of the clearance area, the relative relative sharpness of the teeth, the number of the restrictions, the fluid conditions including pressure and density, and the geometry of the leakage path determine the amount of leakage flow according to formulae and empirical constants which are well known. Many other geometrical arrangements are also used to provide multiple or single leakage restrictions than the style illustrated.

The seal ring is retained in annular groove 15 of the casing 12. As shown in Fig. 2, the seal ring is comprised of four segments each disposed within the groove 15 to accommodate assembly or disassembly of the casing by locating the seal ring segments to separate at the joint 27 of the casing. It is to be understood that while the words "seal ring 13" are used herein, they may apply to an individual seal ring segment and, therefore, should be read in the context of the sentence.

Each segment of the seal ring 13 is shown including the inner ring portion, indicated in Fig. 1 by numeral 13d, having the seal teeth 14 extending from its radially inward surface while its radially outward surface 20a limits the large clearance position by means of its contact with the radial surface 21a of the casing 12. The seal ring 13 also includes an outer ring portion 13a disposed within the casing groove 15 with an inner circumferential surface 13b which, as described below, limits the small clearance position of the seal ring segments by restraining their radial inward movement by contact of surface 13b with surface 17 on the shoulder 12a of casing 12. The seal ring 13 shown in Fig. 1 also includes a neck portion 13c between said inner ring section and said outer ring section into which the shoulder 12a of the casing interlocks to axially locate the ring segment. As described below seal ring neck portion 13c provides a contact pressure surface which, as shown at 12b, is in direct contact with the casing shoulder 12a.

At low or no load conditions, only the weight of the seal ring segments, the confining limits of the casing, and the force of the various springs 16 act on the seal rings. The springs are selected with sufficient strength and dimension under these conditions to cause the seal ring segments to be held in the minimum clearance position.

In Fig. 1, the seal ring 13 is shown in its small clearance condition. The higher pressure side of the seal is identified at 18. This pressure persists in the annular spaces 24 and 15 as a result of an open communication created by one or more local openings 23a. The low pressure condition 19 persists also in the annular space 25.

It can easily be recognized that the resultant axial force of these pressures will cause the seal ring to be pushed toward the low pressure area 19 so as to create a leak resistant seal at location 12b between the seal ring 13 and the casing 12. For a geometry of known dimensions and pressures, the magnitude of this axial force can easily be calculated; also the radial force that would be required to overcome metal-to-metal friction in order to move the seal ring in a radial direction.

Fig. 2 shows the improved segmented packing system using four 90° segments 213 with gravity springs 236a and 236b contained in bores 235 in the bottom of each of the lower two 90° segments 213 that are provided to counter the weight plus a small safety factor of the two separate bottom segments when the segments are in the minimum clearance position.

There will be a tendency for the sides of the two bottom segments to spread open near the horizontal joint.

Side helper springs 254a and 254b, located in bores 255 of lower segments 213 should be included to insure an adequate closing force while allowing the segments to easily open during a shaft rubbing condition. The spring forces should counter, plus providing a small safety factor, the downward moment of the weight force pivoting on springs 236a and 236b.

In the upper half, side helper springs 216a and 216b are provided to urge the lower end of the upper segments 213 to the minimum clearance position by overcoming the friction against motion of the seal segments supported by keeper keys 244.

A spring 217 is located in a bore 258 where the two top segments meet. This spring provides almost enough force to separate the two segments so as to minimize opening forces required during shaft rubbing conditions.

Two springs 236 located in bottom segments 213 are provided to elevate the bottom segments to their minimum clearance position. The forces provided by springs 236 should each be approximately equal to the weight of one segment 213. This insures that segment 213 will be held in the minimum clearance position, yet capable of radial downward motion with only a small force against the rotor 11.

Positive circumferential location of upper segments 213 and retainment of the seal segments and springs 216b are assured by anti-rotation keys 244 which are provided above casing joint 27. Each anti-rotation key includes a rectangular key block fitted in grooves in the left and right sides of casing 12. The key blocks protrude out from casing 12 into spaces where such key blocks provide a fixed horizontal and circumferential support surface for the upper segments of seal ring 213. Anti-rotation keys 244 are secured to casing 12 by mounting screws or bolts attached at the left and right sides to key slots by threaded screw ends extending into the grooves provided in casing 12.

Note that the original manufacturer's springs have been completely removed.

Coil springs are shown in the drawings; but flat, L-shaped springs can be employed in locations 216a, 216b, 254a, 254b, 236a and 236b.

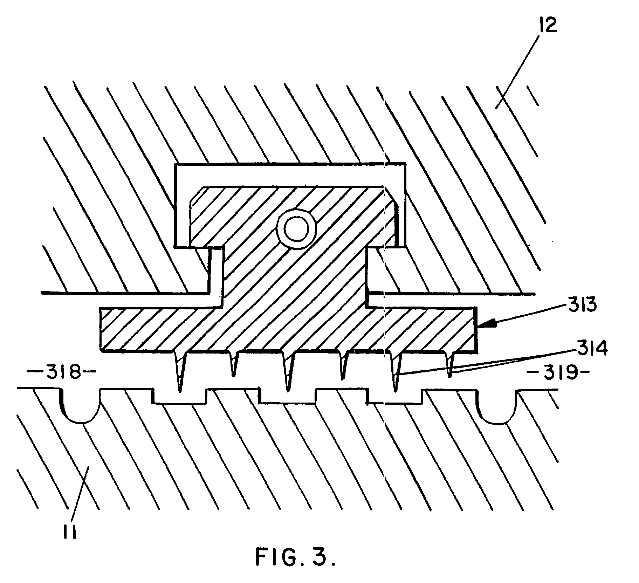

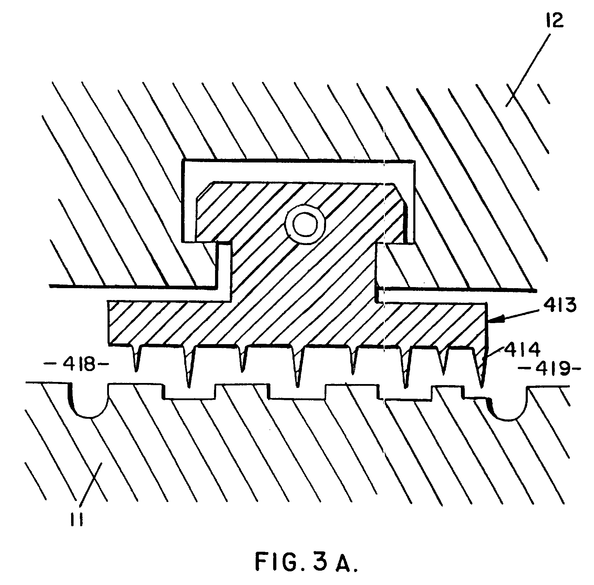

Fig. 3 is a cross sectional drawing of a modified packing ring 313. In the case of a packing ring where the closing pressure forces are very large, the force required from the shaft during temporary periods of misalignment and rubbing will be very large and the heat generated will also be very large. This condition can be improved by removing one or more teeth 314 from the inlet side 318 of the packing. Fig. 3 illustrates this modification, where one tooth on the inlet side has been removed from a ring that is otherwise the same as that shown in Fig. 1.

A similar improvement could be accomplished by adding a tooth 414 to the discharge side 419 as shown in the modified packing ring 413 of Fig. 3A.

In segmented seal rings of the type discussed in this invention there will be times when the pressure drop and flow direction will reverse during the various operating conditions. To assure proper operation, it is important that the higher pressure steam be permitted to enter the space 15 in Fig. 1, yet not be allowed to freely pass from that space into the low pressure zones.

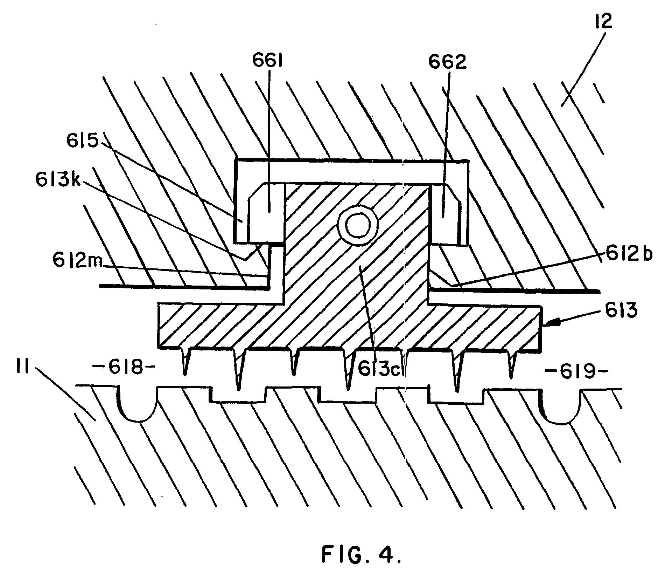

Fig. 4 shows a design provided to accomplish this condition regardless of the flow direction. In Fig. 4. the flow is shown to be traveling from left to right or from 618 to 619. It can enter a space 615 above a packing ring 613 by passing through slots 661 and 662 in the segment hooks at surface 613k, causing space 615 to become pressurized. Flow is discouraged from passing through the corresponding slots by the tight contact of the segment 613 with the casing at 612b. The inner surfaces of the slots should be in line with the outer surfaces of the segment neck 613c.

Should the direction of flow and pressure drop reverse, the packing segment would shift to the left, creating a seal at 612m, and simultaneously opening a passage to space 615 from the high pressure area which is now at 619.

The packing or seal rings which are the subject of this invention can be applied to any turbine packing ring location.

It will be necessary to determine the weight of seal ring segments 13, the confining limits of casing 12, the friction resisting motion and the resultant pressure forces in order to determine the weight of seal ring segments 13, the confining limits of casing 12, the friction resisting motion and the resultant pressure forces in order to determine the ideal force of springs 216a and 216b and gravity springs 236 which act on seal rings 213. The springs are selected and located with sufficient force and dimension under these conditions to cause seal ring segments 213 to behave as if they had less weight and to gently urge them toward the minimum clearance position. In the preferred arrangement, springs 216a and 216b are located to urge the segments in a radial direction to cause them to seek the smaller diameters limited by the defined small or minimum clearance position, as shown in Fig. 1, to the point of contact between segment surface 13k and casing shoulder surface 17.

The minimum clearance position is attained whenever the seal ring is restrained by contact of seal ring surface 13 with casing surface 17, as shown in Fig. 1, or when the inner edges of seal teeth 14 are in contact with shaft or rotor 11.

Those skilled in the art will be able to determine all forces described above thereby determining the spring forces required of the springs to achieve the objects of the invention described herein. It is preferred that all of the forces acting on each segment be summed for radial and circumferential components.

No spring is shown pushing downward on the top packing segments. It should be recognized that time varying pressure forces do exist in the steam spaces adjacent to the packing segments. Such time varying forces can contribute to undesirable vibration and wear of packing segments. In the outer three packing rings of turbine sections, the time varying forces are relatively small and the weight of the top segment should be adequate to prevent such vibration.

In the middle of double flow turbine sections, such as the intermediate and low pressure sections, these time varying forces are greater and the addition of a top spring to help discourage such vibration would be prudent. The spring could be a coil type, or a flat L-shaped spring as has been used in conventional packing segments for many decades.

## Claims

1. An elastic fluid turbine employing a seal ring having segments to minimize leakage between a rotating turbine shaft and stationary components, while also permitting outward motion of the segments with reduced force by the turbine shaft during conditions when the shaft is rubbing against the segments providing a large reduction in heat generation due to friction between said components during start up and at light loads to protect both said seal ring and turbine shaft from damage, **characterised by**:
a stationary turbine casing encircling the rotating shaft and having an annular groove formed therein and extending circumferentially around said shaft, said annular groove being partially defined by at least one annular shoulder on said casing which forms an annular opening of said groove radially into a clearance area between said casing and said shaft; the seal ring supported by and at least partially contained in said groove, said seal ring including upper seal segments located around the upper half of said shaft and lower seal segments located around the lower half of said shaft, each seal segment having seal teeth;
radial springs positioned against said seal segments to urge said seal segments radially inward to form a smaller diameter ring providing a small or close clearance position of said seal ring with said shaft, said small clearance position being limited by surface contact between the seal ring and the casing, said radial springs acting in combination with circumferential springs which act between segment butts to provide forces whose horizontal component acts against the segments to reduce the effective weight of the segments so as to reduce the force on the shaft required to deflect the segments outward during periods of rubbing, said horizontal springs being assisted by vertical gravity springs located between the lower casing and each bottom segment to provide a vertical force slightly greater than the weight of all the seal ring segments supported by said gravity springs so that the effect of all the springs is to cause the segments to be normally positioned in the small clearance position yet be capable of easy outward motion when pushed by the shaft during rubbing conditions with the shaft.

2. An elastic fluid turbine as recited in Claim 1 wherein the upper half seal segments are separated from the lower half seal segments and supported by keys bolted to both sides of the horizontal joint.

3. An elastic fluid turbine as recited in Claim 1 or Claim 2, wherein said gravity springs include a lower half compressed coil spring having a lower spring end and an upper spring end, with the lower spring end making contact against said lower half of said turbine casing, and the upper spring end contained within and biased against the lower seal segment to produce an upward vertical force against said seal segment with a force approximately equal to the weight of the lower segments so the rotating shaft can easily deflect the lower segments outward during a rubbing condition, yet the segments will be forced back to the close clearance condition when the rubbing condition has ended.

4. An elastic fluid turbine as recited in any one of Claims 1 to 3 wherein said segmented seal ring comprises four 90° segments, two upper segments and two lower segments, with the lower segments each supported at the bottom by a single vertical gravity spring which effectively reduces the weight of the segments while pushing upward with a force slightly greater than the weight of the lower segment, two additional side springs providing a radially inward force just below a horizontal joint on the outside of each lower seal ring segment to help provide a closing force following a condition where the shaft forces said segments open, the two segments of the upper half being supported by keys at the horizontal joint and provided with side springs which push each segment toward the shaft at the horizontal joint, while at the top, between the ends of the two segments, a circumferential spring between the ends of the top two segments for providing a force tending to separate the two segments, said spring not having adequate force to cause such separation but reducing the force required from the shaft to cause the segments to move.

5. In an elastic fluid turbine as recited in any one of Claims 1 to 4 wherein said seal segments are modified to remove one or more teeth from the inlet side to help decrease the force necessary to cause radial outward motion in a period of shaft rubbing.

6. In an elastic fluid turbine as recited in any one of Claims 1 to 5 wherein said seal segments are modified to add one or more teeth to the discharge side to decrease the force necessary to cause radial outward motion a period of shaft rubbing.

7. In an elastic fluid turbine as recited in any one of Claims 1 to 6 wherein said seal segments are provided with radial slots in both sides of the packing segment hooks to a depth approximately the same as the neck surface, permitting operation in either flow direction.

8. In an elastic fluid turbine as recited in any one of Claims 1 to 7 wherein said annular groove in the turbine casing is defined by a pair of opposing, spaced apart annular shoulders on said casing.
